# Europäisches Patentamt
## European Patent Office
## Office européen des brevets

(11) Publication number: **0 067 396**
**B1**

## EUROPEAN PATENT SPECIFICATION

(45) Date of publication of patent specification: **23.12.87**

(51) Int. Cl.⁴: **C 08 L 9/06**

(21) Application number: **82104979.8**

(22) Date of filing: **07.06.82**

(54) **An elastomer composition, a vulcanized composition and a tire employing said elastomer composition.**

(30) Priority: **08.06.81 JP 87729/81**

(43) Date of publication of application:
**22.12.82 Bulletin 82/51**

(45) Publication of the grant of the patent:
**23.12.87 Bulletin 87/52**

(84) Designated Contracting States:
**DE FR GB IT NL**

(58) References cited:
**DE-A-1 545 516**
**DE-B-1 301 730**
**DE-B-1 545 518**
**FR-A-1 381 915**
**FR-A-2 405 147**

**Gel Permeation Chromatography
(Altgelt+Segal) 1971, pp. 391-393
Journal of Polymer Science, Part C no. 8,
233-241 (1965)
ibid, Part A-2, vol. 10, 657-672 (1972)
Journal of Applied Polymer Science, vol. 13,
2359-2369 (1969)**

(73) Proprietor: **SUMITOMO RUBBER INDUSTRIES LIMITED**
**No. 1-1, Tsutsui-cho 1-chome
Chuo-ku Kobe-shi Hyogo 651 (JP)**

(73) Proprietor: **SUMITOMO CHEMICAL COMPANY, LIMITED**
**15 Kitahama 5-chome Higashi-ku
Osaka-shi Osaka 541 (JP)**

(72) Inventor: **Furukawa, Hiroshi**
**5-14, Shinnozuka-cho Ashiya-shi
Hyogo-ken (JP)**
Inventor: **Saito, Yuichi**
**Koburyo-nai, 1-162 Hinokuchi-cho
Nishinomiya-shi Hyogo-ken (JP)**
Inventor: **Takao, Hiroyoshi**
**7-16, Kurosunadai 3-chome
Chiba-shi Chiba-ken (JP)**
Inventor: **Yamamoto, Keisaku**
**3-14, Aobadai 5-chome
Ichihara-shi Chiba-ken (JP)**
Inventor: **Imai, Akio**
**17-15, Aobadai 3-chome Ichihara-shi
Chiba-ken (JP)**
Inventor: **Yoshida, Nobuyiki**
**19-4, Aobadai 4-chome
Ichihara-shi Chiba-ken (JP)**

Courier Press, Leamington Spa, England.

**0 067 396**

(72) Inventor: **Okamoto, Yasushi**
**No. 9, Yushudainishi 1-chome**
**Ichihara-shi Chiba-ken (JP)**

(74) Representative: **Vossius & Partner**
**Siebertstrasse 4 P.O. Box 86 07 67**
**D-8000 München 86 (DE)**

# 0 067 396

## Description

The present invention relates to an elastomer composition, a vulcanized composition, and a tire of said elastomer.

Recently, there has been a great demand in the automobile business for a reduction in car fuel costs with a view to saving energy and achieving financial economies. One of the factors which contributes to the fuel cost is the rolling resistance of the tire. One of the reasons for the rolling resistance of the tire is the energy loss resulting from repeated deformation of the tire. Namely, a compression deformation, a flexural deformation and a shear deformation of the tire are brought about by loads and these deformations move successively along the circumference of the tire when running. In these circumstances, a mechanical energy loss is produced during repeated various deformations and recoveries thereof at every part of the tire.

In other words, a rubbery substance such as a tire is what is called a viscoelastic material in which the relationship between stress and strain is non-linear and the strain follows the stress with time lag.

Due to this viscoelasticity, deformations of the tire at the time of contact with the ground and recoveries when away from the ground are repeated during the running of the tire to cause a phase difference in the relationship of the stress and strain so that a hysteresis loss, that is energy loss, occurs.

It is known that such an energy loss is attributable to the structures of carcass and breaker of the tire and a compounding of rubber for the sidewall of the tire, especially to a compound of rubber for the tread.

In order to reduce the rolling resistance of the tire based on the compounding of the tread rubber, reduction of the energy loss by compression deformation, flexural deformation and shear deformation is necessary, which mean reduction of loss compliance $[E''/(E^*)^2]$ as well as a loss modulus $(E'')$ in the aspect of dynamic viscoelastic characteristics of the rubber.

From the viewpont of the rubber itself in a compounded rubber, natural rubber, synthetic isoprene rubber and butadiene rubber with generally low loss compliance and loss modulus values are favourable for achieving savings whereas a styrene-butadiene rubber (SBR) is unfavourable. However SBR is superior and a butadiene rubber and the like are inferior with respect to their frictional property (wet grip property) on the wet road surfaces, said property being the most important property of the tire for passenger cars and the like. Thus there has been no option but to use the compounded rubber containing SBR as a main ingredient at the sacrifice of low rolling resistance from the safety viewpoint. In particular, non-oil-extended SBR having a comparatively low molecular weight, such as SBR 1500, SBR 1502 and the like, or oil-extended SBR which comprises SBR having a comparatively high molecular weight and a large amount (37.5 phr) of high aromatic oil, such as SBR 1778 and the like are mainly employed.

It has been found that the aforementioned antinomic properties are satisfactorily harmonized by employing the specific SBR (hereinafter indicated simply as the SBR) prepared by emulsion polymerisation as an elastomer.

The present invention relates to an elastomer composition comprising a styrene-butadiene rubber wherein not more than 18 percent of said rubber is that exhibiting a residence time on a gel permeation chromatography column using tetrahydrofuran as solvent the same as or longer than that of a polystyrene standard having a molecular chain length of 350 nm.

Further, the present invention relates to a vulcanized composition, and a tire employing said elastomer composition for a tread.

The SBR used in the present invention is prepared by the emulsion polymerization process in an aqueous medium in the presence of a radical-generative initiator.

An important matter in this case is that not more than about 18 percent of the SBR should be that exhibiting a residence time on a gel permeation chromatography column using tetrahydrofuran as solvent the same as or longer than that of a polystyrene standard having a molecular chain length of 350 nm. When the proportion of SBR having this characteristic is more than 18 percent, the rolling resistance of the tire becomes worse and hence this is undesirable.

Furthermore, it is important to control the reaction conditions so that the styrene content of the SBR is from 25 to 45 percent by weight, preferably from 30 to 40 percent by weight. When the styrene content of the SBR is not more than 25 percent by weight, there is no improvement in the wet grip property, and when the styrene content of the SBR is more than 45 percent by weight, the rolling resistance becomes worse.

A remarkable improvement in workability may be achieved without upsetting the balance between low rolling resistance and the high wet grip properties by adding the prescribed amount of an aromatic oil to the SBR after completion of the emulsion polymerization. It is preferable to add 5 to 25 parts by weight of the aromatic oil to 100 parts by weight of the rubber ingredients in order to achieve such improved workability. When the added amount of the aromatic oil is not more than 5 parts by weight to 100 parts by weight of the rubber ingredients, no improvement in workability is achieved, and when the amount of the aromatic oil is 25 or more than 25 parts by weight, not only does the rolling resistance become worse but also a deterioration of the physical properties is brought about by oil migration to each part of the tire such as the case and breaker rubber.

The rubber ingredients of the rubber composition according to the present invention comprise the SBR as main ingredient and may comprise other rubber ingredients such as natural rubber, isoprene rubber,

3

butadiene rubber and the like, the amount of said other rubber ingredients that exerting no influence upon the aforementioned characteristics of the SBR.

In addition to the aforesaid ingredients, the rubber composition according to the present invention comprises suitably other conventional compounding additives such as carbon black, oil, filler, vulcanizing agent, vulcanizing assistant, vulcanizing accelerator and aging-inhibitor.

The rubber composition according to the present invention is best suited for a tire tread because it possesses well-balanced low rolling resistance and high wet grip properties, said properties being contrary to each other and hitherto difficult to harmonize.

The tire employing the rubber composition for the tread is particularly preferable because a remarkable improvement in workability is achieved without impairing the low rolling resistance and good wet grip properties by compounding the specified amount of the aromatic oil. The tire is in the scope of the present invention.

Therefore, the rubber composition according to the present invention may be utilized for tires including radial tires for cars in all fields such as trucks, buses and similar vehicles.

The present invention is illustrated by the following examples and comparative examples.

Examples and Comparative Examples

Nineteen kinds of rubber compositions were prepared by the conventional process in accordance with the compounding prescription in Tables 1 and 2, wherein the rubber compositions 1—6 and 14—17 are examples and the rubber compositions 7—13, 18 and 19 are comparative examples. The rubber composition 7 is that sold by Sumitomo Kagaku Co. as SBR 1500.

Various kinds of physical properties of the rubber compositions were measured and the results obtained are shown in Tables 1 and 2. In the Tables, "L% of molecular distribution" means the percent of SBR exhibiting a residence time on a gel permeation chromatography column using tetrahydrofuran as solvent the same as or longer than that of a polystyrene standard having a molecular chain length of 350 nm.

4

TABLE 1

| Rubber compositions<br><br>Ingredients and physical properties of the rubber compositions | | | Examples | | | | | | Comparative Examples | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Ingredients (parts by weight) | SBR | Compounded amount | 100 | | | | | | 100 | | | | | | |
| | | L% of molecular distribution | 15.3 | 12.1 | 16.8 | 16.2 | 8.7 | 6.6 | 25.0 | 28.0 | 27.1 | 20.2 | 19.4 | 18.9 | 20.7 |
| | | styrene content (%) | 30.0 | 30.0 | 39.0 | 39.0 | 39.0 | 39.0 | 23.5 | 9.0 | 15.5 | 30.0 | 35.3 | 30.0 | 39.0 |
| | N339 Carbon | | 50 | | | | | | | | | | | | |
| | Aromatic oil | | 3 | | | | | | | | | | | | |
| | Wax | | 2 | | | | | | | | | | | | |
| | Aging-inhibitor[1] | | 2 | | | | | | | | | | | | |
| | Stearic acid | | 1 | | | | | | | | | | | | |
| | Zinc oxide | | 3 | | | | | | | | | | | | |
| | Sulfur | | 1.75 | | | | | | | | | | | | |
| | Vulcanizing accelerator[2] | | 1.0 | | | | | | | | | | | | |
| Physical properties of the rubber compositions | Loss modulus (Kgf/cm²)[3] | | 15.7 | 13.9 | 17.5 | 16.7 | 17.1 | 14.8 | 17.1 | 15.4 | 16.1 | 17.0 | 19.0 | 17.9 | 23.2 |
| | Loss compliance ($10^{-3}$cm²/Kgf)[3] | | 2.11 | 2.17 | 2.10 | 2.09 | 2.16 | 1.97 | 2.71 | 2.71 | 2.76 | 2.84 | 2.60 | 2.45 | 2.48 |
| | Index of rolling resistance[4] | | 88 | 81 | 96 | 93 | 95 | 83 | 100 | 93 | 96 | 101 | 107 | 101 | 125 |
| | Index of wet skid[5] | | 53 | 53 | 55 | 55 | 55 | 55 | 52 | 46 | 48 | 53 | 54 | 53 | 55 |
| | Index of pico-abrasion[6] | | 105 | 105 | 106 | 104 | 111 | 118 | 100 | 128 | 112 | 87 | 86 | 98 | 101 |
| | Workability[7] | | × | × | Δ | Δ | Δ | × | ○ | ○ | ○ | ○ | ○ | ○ | ○ |

0 067 396

[1] N-isopropyl-N'-phenyl-p-phenylenediamine

[2] N-cyclohexyl-2-benzothiazyl sulfenamide

[3] measured by viscoelasticity spectrometer available from Iwamoto Seisakusho (conditions of measurement: 170°C, initial strain: 10%, dynamic strain: 2%, amplitude: 10Hz)

[4] (loss modulus of comparative rubber)×75/(loss modulus of reference rubber)+(loss compliance of comparative rubber)×25/(loss compliance of reference rubber) [Rubber composition 7 was used as a reference rubber.]

[5] measured by the portable skid resistant tester

[6] measured by pico-abrasion tester (condition; load: 4.5 Kgf, number of rotation 60 rpm, 80 times of rotation) [taking the value of SBR 1500 available from Sumitomo Kagaku Co. as 100]

[7] evaluated by means of laboratory-scale 8 inch roll (○: good knitting performance of a rubber, no bagging and smooth surface of a rubber; △: much time for knitting performance of a rubber, light bagging; ×: a great deal of time for knitting performance of a rubber, heavy bagging and rough surface of a rubber).

TABLE 2

| Rubber compositions / Ingredients and physical properties of the rubber compositions | | | Examples | | | | Comparative Examples | |
|---|---|---|---|---|---|---|---|---|
| | | | 14 | 15 | 16 | 17 | 18 | 19 |
| Ingredients (parts by weight) | SBR | Compounded amount | 100 | | | | 100 | |
| | | L% of molecular distribution | 15.3 | 12.1 | 16.2 | 6.6 | 25.0 | 18.9 |
| | | styrene content (%) | 30.0 | 30.0 | 39.0 | 39.0 | 23.5 | 30.0 |
| | | content of aromatic oil | 15 | | | | 15 | |
| | N339 Carbon | | 50 | | | | | |
| | Wax | | 2 | | | | | |
| | Aging-inhibitor[1] | | 2 | | | | | |
| | Stearic acid | | 1 | | | | | |
| | Zinc oxide | | 3 | | | | | |
| | Sulfur | | 1.75 | | | | | |
| | Vulcanizing accelerator[2] | | 1 | | | | | |
| Physical properties of the rubber compositions | Loss modulus (Kgf/cm$^2$)[3] | | 12.8 | 11.2 | 13.8 | 12.4 | 13.7 | 14.7 |
| | Loss compliance (10$^{-3}$cm$^2$/Kgf)[3] | | 2.66 | 2.71 | 2.59 | 2.32 | 3.25 | 2.57 |
| | Index of rolling resistance[4] | | 91 | 82 | 95 | 86 | 100 | 100 |
| | Index of wet skid[5] | | 54 | 54 | 56 | 56 | 53 | 54 |
| | Index of pico-abrasion[6] | | 103 | 106 | 103 | 110 | 100 | 95 |
| | Workability[7] | | ○ | ○ | ○ | ○ | ○ | ○ |

[1]–[7] the same meaning as the footnote of Table 1 except that the rubber composition 18 is a reference for index of rolling resistance and for index of pico-abrasion.

## Claims

1. An elastomer composition comprising as main ingredient a styrene-butadiene rubber prepared by emulsion polymerization in an aqueous medium in the presence of a radical-generating initiator, the styrene content of the styrene-butadiene rubber being 25 to 45 percent by weight, and 18 or less percent of the rubber exhibiting a residence time on a gel permeation chromatography column, using tetrahydrofuran as solvent, the same as or longer than that of a polystyrene standard having a molecular chain length of 350 nm.

2. The elastomer composition according to claim 1, wherein the styrene content of the styrene butadiene rubber is 30 to 40 percent by weight.

3. The elastomer composition according to claim 1 or 2 which contains 5 to 25 parts by weight of an aromatic oil per 100 parts by weight of the elastomer components.

4. A vulcanized composition prepared by vulcanizing the elastomer composition according to any one of the preceding claims.

5. A tire whose tread is formed by vulcanizing the elastomer composition according to any one of claims 1 to 3.

## Patentansprüche

1. Elastomer-Zusammensetzung, enthaltend als Hauptbestandteil einen Styrol-Butadien-Kautschuk, der durch Emulsionspolymerisation in einer wäßrigen Lösung in Gegenwart eines Radikal-erzeugenden Initiators hergestellt wurde, wobei der Styrolgehalt des Styrol-Butadien-Kautschuks 25 bis 45 Gew.-% beträgt und höchstens 18% des Kautschuks auf einer mit Tetrahydrofuran als Lösungsmittel betriebenen Gelpermeationschromatographie-Säule eine Verweilzeit aufweist, die genau so lang wie oder länger als die eines Polystyrol-Standards ist, dessen Molekül-Kettenlänge 350 nm beträgt.

2. Elastomer-Zusammensetzung nach Anspruch 1, in der der Styrolgehalt des Styrol-Butadien-Kautschuks 30 bis 40 Gew.-% beträgt.

3. Elastomer-Zusammensetzung nach Anspruch 1 oder 2, die 5 bis 25 Gewichtsteile eines aromatischen Öls pro 100 Gewichtsteile der Elastomer-Komponenten enthält.

4. Vulkanisierte Zusammensetzung, die durch Vulkanisierung der Elastomer-Zusammensetzung gemäß einer der vorangehenden Ansprüche hergestellt wurde.

5. Reifen, dessen Lauffläche durch Vulkanisierung der Elastomer-Zusammensetzung gemäß einem der Ansprüche 1 bis 3 hergestellt wurde.

## Revendications

1. Une composition d'élastomères comprenant comme ingrédient principal ou caoutchouc styrène-butadiène préparé par polymérisation en émulsion dans un milieu aqueux, en présence d'un inducteur radicalaire, la teneur en styrène du caoutchouc styrène-butadiène étant de 25 à 45% en poids et 18% ou moins du caoutchouc présentant un temps de séjour sur une colonne de chromatographie de perméation de gel utilisant le tétrahydrofuranne comme solvant égal ou supérieur à celui d'un polystyrène témoin ayant une longueur de chaîne moléculaire de 350 nm.

2. La composition d'élastomère selon la revendication 1, dans laquelle la teneur en styrène du caoutchouc styrène-butadiène est de 30 à 40% en poids.

3. La composition d'élastomères selon la revendication 1 ou 2, qui contient 5 à 25 parties en poids d'une huile aromatique par 100 parties en poids des composant élastomères.

4. Une composition vulcanisée préparée par vulcanisation de la composition d'élastomères selon l'une quelconque des revendications précédentes.

5. Un pneumatique dont la bande de roulement est formée par vulcanisation de la composition d'élastomère selon l'une quelconque des revendications 1 à 3.